**Europäisches Patentamt**

**European Patent Office**

**Office européen des brevets**

(19)

(11) **EP 1 462 246 A1**

(12) **EUROPEAN PATENT APPLICATION**

(43) Date of publication:
**29.09.2004 Bulletin 2004/40**

(51) Int Cl.7: **B32B 27/32**, B65D 65/40

(21) Application number: **04007232.4**

(22) Date of filing: **25.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **27.03.2003 JP 2003088158
27.01.2004 JP 2004018198**

(71) Applicant: **Futamura Kagaku Kogyo Kabushiki
Kaisha
Nagoya-shi, Aichi-ken (JP)**

(72) Inventors:
• **Ishii, Kentaro Fukamura Kagaku Kokyo K.K.
Oharu-cho Ama-gun Aichi-ken (JP)**
• **Nagae, Hidetoshi Fukamura Kagaku Kokyo K.K.
Oharu-cho Ama-gun Aichi-ken (JP)**

(74) Representative:
**Leson, Thomas Johannes Alois, Dipl.-Ing.
Patentanwälte
Tiedtke-Bühling-Kinne & Partner,
Bavariaring 4
80336 München (DE)**

(54) **Biaxially oriented multilayer film**

(57) A biaxially oriented multilayer film, able to prevent gaps between the film and a package containing a product or wrinkles and to wrap in a predetermined way while preventing smell from being transferred to the product, comprised of a base layer formed by a propylene-based polymer and surface layers formed by a propylene-based resin on the two surfaces of the base layer, wherein a heat shrinkage rate R1 in a length direction and a heat shrinkage rate R2 in a width direction when heating at 120°C for 15 minutes:

$$R1 = (L1_H - L2_H)/L1_H \qquad (a)$$

$$R2 = (L1_W - L2_W)/L1_W \qquad (b)$$

$$0.08 \leq R1 \leq 0.20 \qquad (c)$$

$$0.08 \leq R2 \leq 0.20 \qquad (d)$$

$$|R1-R2| \leq 0.05 \qquad (e)$$

where,

$L1_H$: length before shrinkage in length direction,
$L2_H$: length after shrinkage in length direction,
$L1_W$: length before shrinkage in width direction,
$L2_W$: length after shrinkage in width direction

EP 1 462 246 A1

**Description**

BACKGROUND OF THE INVENTION

1. Field of the Invention

The present invention relates to a biaxially oriented multilayer film.

2. Description of the Related Art

In the past, various types of films made of polypropylene or the like have been used for overwraps for cigarettes, medicines, confectionary, other food, and other products contained in paper boxes. Cigarettes etc. contained in paper boxes are generally overwrapped by automatic packaging machines. These automatic packaging machines heat seal the products with various types of film while the products pass through a path formed by guide plates. The products wrapped by the various types of films are sometimes then again wrapped in sets by other automatic packaging machines.

A biaxially oriented polypropylene film has water resistance, an oxygen barrier property, etc., has stiffness, and is superior in mechanical properties. Further, a biaxially oriented polypropylene film can be given heat sealability. This film is therefore suitable for overwraps. To make a biaxially oriented polypropylene-based film suitable for overwraps, it is known to give the film a specific heat shrinkage property (for example, see Japanese Patent Publication (B) No. 60-36388). This biaxially oriented polypropylene-based film can eliminate gaps occurring between the cigarettes contained in the paper boxes or other packages and the film over a broad area due to the heat shrinkage property. Due to this, biaxially oriented polypropylene-based film can improve the appearance of products.

As another related art, it is known to blend in a silicone-based oil and natural or synthetic wax or other additive at the surface layers of a biaxially oriented multilayer propylene film (for example, see Japanese Patent Publication (A) No. 55-65552). This biaxially oriented multilayer polypropylene film is improved in the value of the frictional resistance of the polypropylene film and smoothened in sliding action between the film and guide plates of the automatic packaging machine by the silicone-based oil blended into it.

Sometimes the multilayer polypropylene film used for wrapping cigarettes contained in paper boxes etc. is formed on its surface layers with a combination of a silicone oil or non-compatible polymer etc. (for example, see Japanese Patent Publication (A) No. 61-112643). This multilayer polypropylene film can lower the coefficient of friction of the film over a wider temperature range than silicone oil. This multilayer polypropylene film can substantially maintain the coefficient of friction of the surface layers even after heat sealing of the film due to this non-compatible polymer.

While the above biaxially oriented polypropylene-based film given a specific heat shrinkage property can eliminate gaps between the film and a package over a wide range, it suffers from the next problem. For example, the biaxially oriented polypropylene-based film features a large difference between the heat shrinkage rate in the length direction and the heat shrinkage rate in the width direction. The film suffers from the problem of a poor balance of the heat shrinkages in the length direction and width direction. Therefore, if wrapping a package by the biaxially oriented polypropylene-based film, wrinkles are liable to occur at the film at the corners of the package, the heat sealed parts, and surrounding parts and ruin the appearance of the product contained in the package. On the other hand, if increasing the value of the heat shrinkage rate of the biaxially oriented polypropylene-based film to prevent wrinkles at the corners of the package etc., the product is liable to deform due to shrinkage of the film.

A biaxially oriented multilayer polypropylene film containing a silicone-based oil can improve the value of the frictional resistance of the film and smoothen the sliding action between the film and guide plates, but the following problem occurs when overwrapping a set of products wrapped in the polypropylene film. For example, if improving the sliding property, there is the problem that a top product ends up sliding off the bottom product when stacking the wrapped products. This problem easily arises when there is little gap between the film and packages, there are little wrinkles of the film, and other cases where the packages have a hard time moving inside the film of the wrapping. Further, there is also the problem of the top products and bottom products sticking together due to the silicone-based oil etc. and therefore a plurality of products forming a single piece, that is, "blocking" occurring.

A multilayer polypropylene film can be given surface relief by combination of a silicone oil or non-compatible polymer etc. so that even if stacking products wrapped by this multilayer polypropylene film, blocking can be prevented, but there is the following problem. For example, there is the problem that non-compatible polymer particles will drop off from the surface of the multilayer polypropylene film and foul the automatic packaging machine or foul or scratch the products. Further, the polymer particles dropping off to the guide plates obstruct wrapping the products passing through the path made up of the guide plates and make it impossible to wrap the products in a predetermined way.

In addition, when opening wrapping made of biaxially oriented multilayer polypropylene film etc., there is the problem that the smell of the film etc. is slightly transferred to the product due to the various types of additives etc.

blended into the film.

The above biaxially oriented multilayer polypropylene film etc. may contain an antistatic agent to prevent the film from becoming charged when wrapping a product. Charging of the biaxially oriented multilayer polypropylene film etc. cannot be sufficiently prevented by just blending the antistatic agent. In this case, there is the problem that the film cannot be smoothly fed out from a film roll of the automatic packaging machine due to the charging and the product cannot be wrapped in the predetermined way. Even if the film is smoothly fed out right after the start of wrapping of products, the film is liable to become charged along with the progress in the wrapping work.

SUMMARY OF THE INVENTION

An object of the present invention is to provide a biaxially oriented multilayer film able to prevent gaps between the film and a package containing a product or wrinkles and to perform predetermined wrapping while preventing a smell from being transferred to the product.

To attain the above object, there is provided a biaxially oriented multilayer film comprised of a base layer formed by a propylene-based polymer and surface layers formed by a propylene-based resin on the two surfaces of the base layer, wherein a heat shrinkage rate R1 in a length direction and a heat shrinkage rate R2 in a width direction when heating at 120°C for 15 minutes satisfy the following:

$$R1 = (L1_H - L2_H)/L1_H \tag{a}$$

$$R2 = (L1_W - L2_W)/L1_W \tag{b}$$

$$0.08 \leq R1 \leq 0.20 \tag{c}$$

$$0.08 \leq R2 \leq 0.20 \tag{d}$$

$$|R1 - R2| \leq 0.05 \tag{e}$$

where,

$L1_H$:    length before shrinkage in length direction,
$L2_H$:    length after shrinkage in length direction,
$L1_W$:    length before shrinkage in width direction,
$L2_W$:    length after shrinkage in width direction

According to the biaxially oriented multilayer film of the present invention, it is possible to wrap a product in a predetermined way while preventing gaps between the film and the package containing a product or wrinkles and preventing the transfer of smell to the product.

Preferably, the base layer contains 80 to 95 parts by weight of a propylene-based polymer and 5 to 20 parts by weight of a hydrocarbon resin. Since the base layer contains 80 to 95 parts by weight of a propylene-based polymer and 5 to 20 parts by weight of a hydrocarbon resin, it is possible to realize a desired value of the heat shrinkage rate of the biaxially oriented multilayer film.

More preferably, the hydrocarbon resin contained in the base layer is a petroleum resin having a softening point of 130 to 150°C. Since the base layer is a petroleum resin having a softening point of 130 to 150°C, it is possible to wrap a product while preventing the transfer of the smell of the biaxially oriented multilayer film to the product.

Still more preferably, the total peak area detected in a retention time of 10 minutes to 50 minutes when measuring components heated and volatilizing at 160°C for 15 minutes by gas chromatography is not more than 30 pA·s. Since the total peak area detected in a retention time of 10 minutes to 50 minutes when measuring components heated and volatilizing at 160°C for 15 minutes by gas chromatography is not more than 30 pA·s, it is possible to suppress transfer of the smell of the biaxially oriented multilayer film to the product.

Still more preferably, the hydrocarbon resin contained in the base layer is a dicyclopentadiene-based petroleum resin having a softening point of 130 to 150°C. Since the hydrocarbon resin contained in the base layer is a dicyclopentadiene-based petroleum resin having a softening point of 130 to 150°C, it is possible to wrap a product while preventing the transfer of the smell of the biaxially oriented multilayer film to the product.

Still more preferably, a dynamic coefficient of friction μ1 of the film measured by JIS K 7125 is not more than 0.3 and a dynamic coefficient of friction μ2 of the film measured by JIS K 7125 with a measurement speed of 25 mm/min is not less than 0.15. Since the dynamic coefficient of friction μ1 of the film measured by JIS K 7125 is not more than 0.3 and the dynamic coefficient of friction μ2 of the film measured by JIS K 7125 with a measurement speed of 25 mm/min is not less than 0.15, it is possible to smoothen the sliding action between the biaxially oriented multilayer film and guide plates of an automatic packaging machine and obtain a set of two products without a top product sliding off a bottom product when stacking products wrapped by the biaxially oriented multilayer film.

Still more preferably, the time when a saturated charging voltage on at least one surface of the film is reduced to half is not more than 200 sec. Since the time when a saturated charging voltage on at least one surface of the film is reduced to half is not more than 200 sec, the charge at the surface of the biaxially oriented multilayer film can be quickly released, the film can be prevented from becoming charged, and the film can be smoothly fed out from the film roll.

BRIEF DESCRIPTION OF THE DRAWINGS

These and other objects and features of the present invention will become clearer from the following description of the preferred embodiments given with reference to the attached drawings, wherein:

FIG. 1 is a gas chromatography analysis chart according to Example 1;
FIG. 2 is a gas chromatography analysis chart according to Example 9;
FIG. 3 is a gas chromatography analysis chart according to Example 10;
FIG. 4 is a gas chromatography analysis chart according to Comparative Example 4; and
FIG. 5 is a gas chromatography analysis chart according to Comparative Example 5.

DESCRIPTION OF THE PREFERRED EMBODIMENTS

Preferred embodiments of the present invention will be described in detail below while referring to the attached figures.

The biaxially oriented multilayer film according to the present invention has a base layer formed from a propylene-based polymer and surface layers formed by a propylene-based resin on the two surfaces of the base layer.

The propylene-based polymer forming the base layer is a propylene homopolymer, a copolymer comprised of propylene and ethylene, butene, 4-methylpentene, octene, or another α-olefin, or a mixture of the same. In particular, the base layer is preferably formed by a mixture of a polypropylene homopolymer and propylene-ethylene random copolymer from the viewpoint of the biaxially oriented multilayer film being easily drawn at a low temperature.

The propylene-based resin forming the surface layers is made a copolymer of propylene and α-olefin to impart heat sealability to the surface layers. Note that the α-olefin is at least one type selected from ethylene and $C_4$ to $C_{10}$ monomers. The propylene-based resin is a propylene-ethylene random copolymer, propylene-butene random copolymer, propylene-ethylene-butene three-way random copolymer, etc. The melting point of the propylene-based resin is preferably 120 to 150°C. If doing this, it is possible to greatly reduce peeling etc. due to bonding defects at parts bonding the biaxially oriented multilayer film due to the heat for wrapping the product.

The base layer and surface layers of the biaxially oriented multilayer film may have a lubricant, antistatic agent, antioxidant, neutralizing agent, antiblocking agent, or other additive added to them in accordance with need.

Further, the biaxially oriented multilayer film has a heat shrinkage R1 in the length direction and heat shrinkage rate R2 in the width direction when heating at 120°C for 15 minutes satisfying the following:

$$R1 = (L1_H - L2_H)/L1_H \qquad (a)$$

$$R2 = (L1_W - L2_W)/L1_W \qquad (b)$$

$$0.08 \leq R1 \leq 0.20 \qquad (c)$$

$$0.08 \leq R2 \leq 0.20 \tag{d}$$

$$|R1-R2| \leq 0.05 \tag{e}$$

where,

L1$_H$: length before shrinkage in length direction,
L2$_H$: length after shrinkage in length direction,
L1$_W$: length before shrinkage in width direction,
L2$_W$: length after shrinkage in width direction

That is, biaxially oriented multilayer film has a heat shrinkage rate R1 in the length direction and a heat shrinkage rate R2 in the width direction when heating at 120°C for 15 minutes of 0.08 (8%) to 0.20 (20%), preferably 0.08 (8%) to 0.15 (15%), where |R1-R2|≤0.05 (5% or less), preferably 0.03 (3% or less). The inventors verified that gaps occurred between the film and package or wrinkles occurred when automatically wrapping products by film. If making the two heat shrinkage rates R1 and R2 8% to 20% and the value of |R1-R2| not more than 5%, it is possible to wrap products in the predetermined way without gaps or wrinkles in the products. Due to this, the appearance of the products is remarkably improved. In particular, when wrapping products not cubic in shape, if the value of |R1-R2| is made not more than 5%, preferably not more than 3%, the biaxially oriented multilayer film shrinks with a good balance and the appearance of the products is greatly improved in the above way.

On the other hand, the inventors revealed that when the two heat shrinkage rates R1 and R2 were less than 8% or over 20%, if the value of |R1-R2| is over 5%, if automatically wrapping products by the biaxially oriented multilayer film, it is not possible to prevent gaps between the film and package or wrinkles. Therefore, in such a case, it is not possible to wrap products in the predetermined way free of gaps or wrinkles in the products and the products become poor in appearance.

The biaxially oriented multilayer film is given the above heat shrinkage rate R1 by adjusting the melt index (MI) of the propylene-based polymer forming the base layer or making the temperature at the time of drawing a low temperature (preferably 80 to 140°C) to change the drawing ratio. The biaxially oriented multilayer film of the present invention is formed by the later mentioned temperature, drawing ratio, etc.

The biaxially oriented multilayer film may contain 80 to 95 parts by weight of a propylene-based polymer and 5 to 20 parts by weight of a hydrocarbon resin. The propylene-based polymer is preferably formed by 30 to 80 parts by weight of a polypropylene homopolymer and 15 to 50 parts by weight of a propylene-ethylene random copolymer. When the propylene-ethylene random copolymer is 15 to 50 parts by weight, it is easy to draw the biaxially oriented multilayer film at a low temperature and the heat shrinkage rate R1 of the film etc. can be made the desired values.

On the other hand, when the propylene-ethylene random copolymer is less than 15 parts by weight, low temperature drawing of the biaxially oriented multilayer film is no longer easy and the heat shrinkage rate R1 etc. are hard to make the desired values. Further, when the propylene-ethylene random copolymer exceeds 50 parts by weight, the heat shrinkage rate R1 etc. cannot be made the desired values. When over 50 parts by weight, the stiffness of the biaxially oriented multilayer film is weak and the film is difficult to be used in an automatic packaging machine.

The hydrocarbon resin increases the ranges of the drawing temperature or drawing ratio and makes it easy to make the heat shrinkage rate R1 etc. of the biaxially oriented multilayer film the desired values. If the hydrocarbon resin is less than 5 parts by weight, the ranges cannot be increased. Further, when the hydrocarbon resin exceeds 20 parts by weight, the problem arises of the film breaking during formation.

The hydrocarbon resin contained in the base layer of the biaxially oriented multilayer film may be a petroleum resin having a softening point of 130 to 150°C. As this petroleum resin, a synthetic resin-based petroleum resin or natural resin-based petroleum resin may be mentioned.

The synthetic resin-based petroleum resin is an aliphatic petroleum resin having a $C_5$ fraction as its material, an aromatic petroleum resin having a $C_9$ fraction as its material, an alicyclic petroleum resin having a $C_9$ fraction or dicyclopentadiene as its material, a copolymer-based petroleum resin comprised of at least two petroleum resins copolymerized, or a hydrogenated petroleum resin comprised of the above aliphatic petroleum resin, aromatic petroleum resin, alicyclic petroleum resin, or copolymer-based petroleum resin hydrogenated.

The natural resin-based petroleum resin is a terpene resin of polymerized α-pinene or β-pinene produced from terpine oil, terpene phenol resin of polymerized phenol resin and terpene resin, terpene resin given polarity by styrene etc. to modify the aromatic group, hydrogenated terpene resin, abietic acid obtained from rosin, gum rosin comprised mainly of derivatives of abietic acid, wood rosin, hydrogenated rosin, and a rosin-phenol resin obtained by reacting a phenol resin and rosin.

The biaxially oriented multilayer film may have a total peak area detected in a retention time of 10 minutes to 50 minutes of not more than 30 pA·s when measuring the components heated and volatilizing at 160°C for 15 minutes by gas chromatography.

That is, the biaxially oriented multilayer film has a total peak area of the volatile components detected under the above conditions of not more than 30 pA·s, preferably not more than 10 pA·s. The inventors verified that the smell of the film is not transferred to products automatically wrapped by a film having a total peak area of not more than 30 pA·s. Due to this, it can be expected that wrapping by this film will not impair the taste of products. On the other hand, the inventors revealed that the smell of the film ends up being transferred to the products automatically wrapped by a film having a total peak area of more than 30 pA·s.

The hydrocarbon resin contained in the base layer of the biaxially oriented multilayer film may be a dicyclopentadiene-based petroleum resin having a softening point of 130 to 150°C. The biaxially oriented multilayer film containing this dicyclopentadiene-based petroleum resin in its base layer can wrap products while particularly preventing the smell being transferred to the products. Note that here, the "dicyclopentadiene-based resin" means a hydrogenated resin compound comprised of a resin compound having dicyclopentadiene as its main skeleton and having hydrogen added.

The biaxially oriented multilayer film may have a dynamic coefficient of friction $\mu 1$ of the film measured by JIS K 7125 of not more than 0.3 and a dynamic coefficient of friction $\mu 2$ of the film measured by JIS K 7125 with a measurement speed of 25 mm/min of not less than 0.15. If the dynamic coefficient of friction $\mu 1$ is made not more than 0.3, it is possible to smoothen the sliding action of the film and the guide plates of the automatic packaging machine and wrap the products as desired. However, if the dynamic coefficient of friction $\mu 1$ is made not more than 0.3, a top product ends up sliding off a bottom product when stacking the wrapped products and a set of wrapped products cannot be overwrapped. To prevent this, the dynamic coefficient of friction $\mu 1$ is made not more than 0.3 and the dynamic coefficient of friction $\mu 2$ is made at least 0.15. By doing this, it is possible to smoothen the sliding action of the film with the guide plates of the automatic packaging machine and wrap two products well as a set without the top product sliding off the bottom product.

The surface layers of the biaxially oriented multilayer film contains a silicone oil, silicone gum, or other release agent. The antiblocking agent is added to the surface layers of the film to obtain the above dynamic coefficient of friction. Note that the particle size of the antiblocking agent should be made one suitable for the thickness of the surface layers.

When the antiblocking agent is comprised of spherical particles, the antiblocking agent easily detaches from the surface layers and is liable to foul the automatic packaging machine. To prevent this, the antiblocking agent preferably is comprised of irregularly shaped particles. In particular, the antiblocking agent is preferably comprised of irregularly shaped silica particles having an oil absorption of 100 to 200 ml/100 g. When the oil absorption is less than 100 ml/100 g, the antiblocking agent becomes hard and the film to which the blocking agent is added will become inferior in scratch resistance. If films rub against each other, the films will be easily scratched. On the other hand, when the oil absorption is over 200 ml/100 g, the dynamic coefficient of friction $\mu 2$ cannot be made at least 0.15. Note that when the amount of the antiblocking agent added to the base layer is less than 0.1 part by weight, the desired properties cannot be obtained. On the other hand, when the amount of the antiblocking agent is over 0.4 part by weight, the scratch resistance of the film is inferior.

The biaxially oriented multilayer film has a time when a saturated charging voltage on at least one surface of the film is reduced to half of not more than 200 sec. Below, the time when the saturated charging voltage is reduced to half is called the "half life". When the half life is not more than 200 seconds, it is possible to quickly release the charge on the surface of the biaxially oriented multilayer film. Due to this, it is possible to suppress charging of the film and smoothly feed out the film from the film roll. The half life is preferably not more than 50 seconds. In this case, it is particularly possible to smoothly feed out the film. On the other hand, when the half life exceeds 200 seconds, it is not possible to suppress charging of the film and not possible to smoothly feed out the film.

The biaxially oriented multilayer film is preferably given a half life of not more than 200 seconds by adding 0.5 to 1.2 parts by weight of an antistatic agent to 100 parts by weight of the propylene-based polymer forming the base layer and treating the base layer by corona discharge.

The antistatic agent is preferably at least one agent selected from amine-based antistatic agents and aliphatic ester-based antistatic agents. The amine-based antistatic agents include alkyl diethanolamines, polyoxyethylene alkylamides, etc. Further, these aliphatic ester-based antistatic agents include monoglyceryl fatty acid esters, diglyceryl fatty acid esters, sorbitan fatty acid esters, etc. When the amount of the antistatic agent added to 100 parts by weight of the propylene-based polymer is less than 0.5 part by weight, it is not possible to suppress charging of the film. On the other hand, when the antistatic agent exceeds 1.2 parts by weight, the film is liable to whiten.

The corona discharge density in the corona discharge treatment is 10 to 20 W·s/$m^2$, preferably 12 to 17 W·s/$m^2$. When the corona discharge density is less than 10 W·s/$m^2$, it is not possible to suppress charging of the film. On the other hand, when the corona discharge density exceeds 20 W·s/$m^2$, trouble occurs such as the surface of the film being scratched.

Note that to make the half life of the biaxially oriented multilayer film not more than 200 seconds, the film roll is preferably aged at 30 to 40°C for 24 hours (heat treatment). When the temperature in this aging treatment is not more than 25°C, it is not possible to adjust the bleedout of the antistatic agent. On the other hand, when the temperature is at over 45°C, the hydrophilicity of the surface of the film falls and the effect of suppression of charging of the film is liable to end up falling.

Further, it is preferable to wind up the biaxially oriented multilayer film on the film roll aged at the above temperature and time and age the film roll again over the above temperature and time. By doing this, the film half lives of the film wound close to the core of the film roll and the film positioned away from the core become equal values. Therefore, the half life of the film wound up on the film roll becomes up to than 200 seconds without regard as to the winding position.

In addition, the biaxially oriented multilayer film is treated to be moistened or treated to eliminate static electricity by a known static-eliminating apparatus in the production process. Due to this, it is possible to further suppress the charging of the film. As a result, it is possible to more smoothly feed out film from the film roll. Even under low humidity conditions in the winter when static electricity easily occurs, it is possible to wrap products in a predetermined way by the film without gaps or wrinkles.

EXAMPLES

Below, the physical properties and evaluations of the examples and comparative examples and the measurement methods of the same will be shown. The measured values and other evaluation results will be shown in Table 1 to Table 4. The heat shrinkage rate R was found for the heat shrinkage rate R1 in the length direction and the heat shrinkage rate R2 in the width direction. Samples having widths of 15 mm in the length direction and width direction were heated without a load at 120°C for 15 minutes to cause shrinkage. The heat shrinkage rate R1 in the length direction and the heat shrinkage rate R2 in the width direction were found by the following. Note that the heating apparatus used was an air circulation type thermostatic chamber (DN600 made by Yamato Scientific Co., Ltd.)

$$R1 = (L1_H - L2_H)/L1_H \tag{g}$$

$$R2 = (L1_W - L2_W)/L1_W \tag{h}$$

where,

$L1_H$:    length before shrinkage in length direction,
$L2_H$:    length after shrinkage in length direction,
$L1_W$:    length before shrinkage in width direction,
$L2_W$:    length after shrinkage in width direction

The wrapability was evaluated by visually confirming and evaluating by the following criteria the appearance of products wrapped by the biaxially oriented multilayer film using an automatic packaging machine (W-322 made by Tokyo Automatic Machinery Works Ltd.):

4: Film and product in close contact with no wrinkles and exhibiting good appearance of product
3: Film observed to have wrinkles, but no problem in appearance of product
2: Film observed to have wrinkles, with problem in appearance of product
1: Film and product not in close contact, gap between film and product or deformation of product observed, and large problem in appearance of product

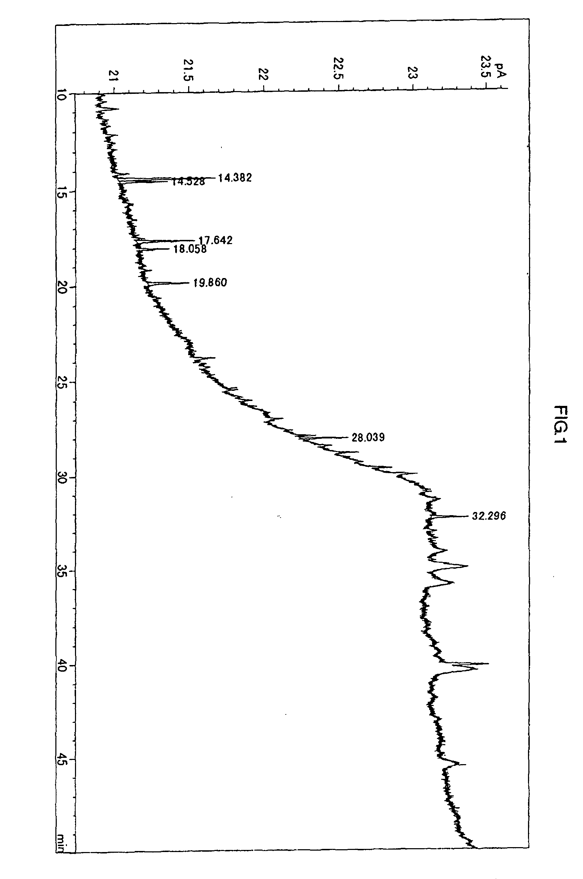

The total peak area was measured under the following conditions by a gas chromatography system (measurement apparatus: HP6890 made by Hewlett Packard, column: HP-Wax made by Hewlett Packard). Samples of 2 g cut from the biaxially oriented multilayer film were sealed in 20 ml vials and heated at 160°C for 15 minutes. The component volatilizing by this heating was measured by sampling 1 ml amounts of gas in the vials using a head space sampler (HP7694 made by Hewlett Packard) and then charging them into the gas chromatography system. The total peak area was found from the peak values detected by the measurement apparatus in the retention time of 10 minutes to 50 minutes (see FIG. 1 to FIG. 5). The total peak area was found by adding the areas of the parts enclosed by the approximation baselines connecting the start points and the end points of the peaks by a straight line and the peaks. The carrier gas was made helium and the carrier gas flow rate was made 2.0 ml/min. Note that the column was heated at 100°C for 10 minutes, then raised in temperature at 5°C/min up 200°C and heated at 200°C for 20 minutes.

The taste of products was evaluated by the following method. First, products contained in paper boxes (in this example, cigarettes) were wrapped by the biaxially oriented multilayer film using the automatic packaging machine (W-322 made by Tokyo Automatic Machinery Works Ltd.) The products wrapped by the film were heated at a temperature of 60°C for 6 hours, then the smell and taste of the products (cigarettes) were evaluated by the senses of an eight-member panel. For the blanks, products before wrapping (cigarettes) were used. Note that the smell and taste of the products (cigarettes) were evaluated by totaling the evaluations of the eight-member panel, while the taste of the products was evaluated in general based on the totals (excellent, good, and not possible).

5: No difference from blank felt
4: Slight difference from blank felt
3: Difference from blank felt
2: Considerable difference from blank felt
1: Extreme difference from blank felt

The dynamic coefficient of friction was measured as the dynamic coefficient of friction $\mu1$ and the dynamic coefficient of friction $\mu2$. The dynamic coefficient of friction $\mu1$ is the value measured by JIS K 7125. The dynamic coefficient of friction $\mu2$ is the minimum value of the dynamic coefficient of friction measured based on JIS K 7125 at a measurement speed of 25 mm/min.

The blocking resistance was measured by the following method. First, biaxially oriented multilayer films cut into 20 mm widths were superposed shifted from each other, then a 20 mm width plate was placed on them at a right angle. Next, a 9.8N weight was applied to the placed plate and the biaxially oriented multilayer films were allowed to stand at 40°C for 24 hours. Further, the shear force of the biaxially oriented multilayer film by a tensile speed of 20 mm/min in a tensile tester was measured. The larger the measured value, the worse the blocking resistance signified.

The stacking property was evaluated by the following method. First, products wrapped by the biaxially oriented multilayer film were stacked to obtain a set of two products stacked above and below. Next this set was sent to a line for wrapping the set by various machines. The stackability was evaluated by the following criteria by visually confirming whether the top product in the delivered set slid off the bottom product.

Good: The top product did not slide off the bottom product and the two products formed a set
Poor: The top product slid off the bottom product and the two products did not form a set

The scratch resistance was evaluated using the test device used in JIS K 7125 with a weight of the sliding piece of 1.2 kg. Specifically, the scratch resistance was evaluated by operating the test device in the same way as the time of measurement of the dynamic coefficient of friction $\mu1$. The extent of the test piece, the biaxially oriented multilayer film, was visually confirmed and evaluated by the following criteria:

3: No scratches occurred
2: Scratches occurred
1: Many scratches observed

The resistance to dropping was evaluated by wrapping a product by a biaxially oriented multilayer film using the above automatic packaging machine (W-322 made by Tokyo Automatic Machinery Works Ltd.) and visually confirming the state of deposition of the antiblocking agent on the various rolls of the packaging machine by the following criteria. When the evaluation is good, the resistance to dropping of the antiblocking agent etc. is superior and a product can be wrapped in a predetermined way without the automatic packaging machine being fouled:

Good: Almost no antiblocking agent etc. sticks to the various rolls
Poor: Antiblocking agent etc. can be confirmed to be sticking to various rolls

The half life was measured by the following method using a static honestmeter (Type S-5109 made by Shishido Shokai). First, biaxially oriented multilayer film cut to a 50 mm width was fixed to the turntable of the static honestmeter. The film was fixed to the turntable from above by a metal piece having a 32 mm x 32 mm through hole. Next, the turntable was rotated at 1550 rpm while the biaxially oriented multilayer film was charged from a distance of 20 mm through the through hole by a voltage of +10 kV until saturated. The voltage was stopped while rotating the turntable. Next, the time until the saturated charged voltage of the surface of the biaxially oriented multilayer film dropped to half (half life) was measured.

The feed out property was evaluated using the above automatic packaging machine (W-322 made by Tokyo Automatic Machinery Works Ltd.) and viewing the extent of sticking of the biaxially oriented multilayer film on the surface of the film roll of the automatic packaging machine according to the following criteria:

    3: Film does not stick to film roll
    2: Film sticks slightly to film roll
    1: Film mostly sticks to film roll

Example 1

The propylene-based polymer forming the base layer is made a mixture of homopolypropylene, a propylene-ethylene random copolymer, and a hydrocarbon resin contained in the base layer constituted by a hydrogenated dicyclopentadiene-based petroleum resin having a softening point of 140°C. This base layer is formed by mixing 75 parts by weight of the homopolypropylene, 15 parts by weight of the propylene-ethylene random copolymer, and 10 parts by weight of the hydrogenated dicyclopentadiene-based petroleum resin. Note that 1.0 part by weight of an antistatic agent is added to 100 parts by weight of this mixture. This antistatic agent is a mixture of an alkyl diethanolamine and monoglyceryl stearic acid ester. The ratio of mixture is 1:1.

The propylene resin forming the surface layers is formed by mixing 1.5 parts by weight of a silicone oil and 0.1 part by weight of irregularly shaped silica having a particle size of 2.9 μm into 100 parts by weight of a propylene-ethylene-butylene random copolymer having a melting point of 130°C (ethylene and butylene content of 7 parts by weight). The oil absorption of the irregularly shaped silica is 170 ml/100 g.

The biaxially oriented multilayer film of Example 1 was formed by the following procedure. First, the mixtures forming the base layer and surface layers were melt extruded from two extruders to obtain a non-oriented three-layer sheet having a thickness ratio of 1/18/1. Next, the non-oriented three-layer sheet was drawn five-fold at 130°C in the length direction, then was drawn eight-fold in the width direction to obtain a biaxially oriented multilayer film having a thickness of 20 μm. One surface of the biaxially oriented multilayer film was treated by corona discharge at a corona discharge density of 15W·s/m$^2$. The total peak area of Example 1 was calculated from the gas chromatography analysis chart shown in FIG. 1.

Example 2

The biaxially oriented multilayer film of Example 2 was produced in the same way as Example 1 except that the base layer was formed by a mixture of 70 parts by weight of homopolypropylene, 20 parts by weight of a propylene-ethylene random copolymer, and 10 parts by weight of a hydrogenated dicyclopentadiene-based petroleum resin having a softening point of 140°C.

Example 3

The biaxially oriented multilayer film of Example 3 was produced in the same way as Example 1 except that the base layer was formed by a mixture of 65 parts by weight of homopolypropylene, 25 parts by weight of a propylene-ethylene random copolymer, and 10 parts by weight of a hydrogenated dicyclopentadiene-based petroleum resin having a softening point of 140°C.

Example 4

The biaxially oriented multilayer film of Example 4 was produced in the same way as Example 1 except that the base layer was formed by a mixture of 65 parts by weight of homopolypropylene, 30 parts by weight of a propylene-ethylene random copolymer, and 5 parts by weight of a hydrogenated dicyclopentadiene-based petroleum resin having a softening point of 140°C.

Example 5

The biaxially oriented multilayer film of Example 5 was produced in the same way as Example 1 except that the base layer was formed by a mixture of 60 parts by weight of homopolypropylene, 30 parts by weight of a propylene-ethylene random copolymer, and 10 parts by weight of a hydrogenated dicyclopentadiene-based petroleum resin having a softening point of 140°C.

Example 6

The biaxially oriented multilayer film of Example 6 was produced in the same way as Example 1 except that the base layer was formed by a mixture of 55 parts by weight of homopolypropylene, 30 parts by weight of a propylene-ethylene random copolymer, and 15 parts by weight of a hydrogenated dicyclopentadiene-based petroleum resin having a softening point of 140°C.

Example 7

The biaxially oriented multilayer film of Example 7 was produced in the same way as Example 1 except that the base layer was formed by a mixture of 55 parts by weight of homopolypropylene, 35 parts by weight of a propylene-ethylene random copolymer, and 10 parts by weight of a hydrogenated dicyclopentadiene-based petroleum resin having a softening point of 140°C.

Example 8

The biaxially oriented multilayer film of Example 8 was produced in the same way as Example 1 except that the base layer was formed by a mixture of 65 parts by weight of homopolypropylene, 30 parts by weight of a propylene-ethylene random copolymer, and 5 parts by weight of a hydrogenated dicyclopentadiene-based petroleum resin having a softening point of 150°C.

Comparative Example 1

The biaxially oriented multilayer film of Comparative Example 1 was produced in the same way as Example 1 except that the base layer was formed by a mixture of 75 parts by weight of homopolypropylene, 10 parts by weight of a propylene-ethylene random copolymer, and 15 parts by weight of a hydrogenated dicyclopentadiene-based petroleum resin having a softening point of 140°C.

Comparative Example 2

The biaxially oriented multilayer film of Comparative Example 2 was produced in the same way as Example 1 except that the base layer was formed by a mixture of 55 parts by weight of homopolypropylene, 35 parts by weight of a propylene-ethylene random copolymer, and 10 parts by weight of a hydrogenated dicyclopentadiene-based petroleum resin having a softening point of 140°C and by the nonoriented film was drawn at 90°C.

Comparative Example 3

The biaxially oriented multilayer film of Comparative Example 3 was produced in the same way as Example 1 except that the nonoriented sheet was drawn in the same way as Comparative Example 2 and the base layer was formed by a mixture of 45 parts by weight of homopolypropylene, 40 parts by weight of a propylene-ethylene random copolymer, and 15 parts by weight of a hydrogenated dicyclopentadiene-based petroleum resin having a softening point of 140°C.

Table 1

| | Examples | | | | | | | | Comparative Examples | | |
|---|---|---|---|---|---|---|---|---|---|---|---|
| | 1 | 2 | 3 | 4 | 5 | 6 | 7 | 8 | 1 | 2 | 3 |
| Homopoly-propylene (parts by weight) | 75 | 70 | 65 | 65 | 60 | 55 | 55 | 65 | 75 | 55 | 45 |
| Proylene-ethylene random copolymer (parts by weight) | 15 | 20 | 25 | 30 | 30 | 30 | 35 | 30 | 10 | 35 | 40 |
| Hdrogenated dicyclopentadiene-based petroleum resin (parts by weight) | 10 | 10 | 10 | 5 | 10 | 15 | 10 | 5* | 15 | 10 | 15 |

Table 1 (continued)

| | Examples | | | | | | | | Comparative Examples | | |
|---|---|---|---|---|---|---|---|---|---|---|---|
| | 1 | 2 | 3 | 4 | 5 | 6 | 7 | 8 | 1 | 2 | 3 |
| Heat shrinkage rate R1 | 0.08 | 0.09 | 0.10 | 0.11 | 0.11 | 0.11 | 0.13 | 0.10 | 0.05 | 0.14 | 0.23 |
| Heat shrinkage rate R2 | 0.08 | 0.10 | 0.11 | 0.15 | 0.11 | 0.11 | 0.16 | 0.14 | 0.04 | 0.20 | 0.30 |
| R1-R2 | 0.00 | 0.01 | 0.01 | 0.04 | 0.00 | 0.00 | 0.03 | 0.04 | 0.01 | 0.06 | 0.07 |
| Wrapability | 3 | 4 | 4 | 3 | 4 | 4 | 3 | 3 | 1 | 2 | 1 |
| 5* in the table shows the parts by weight of the hydrogenated terpene resin. | | | | | | | | | | | |

Example 9

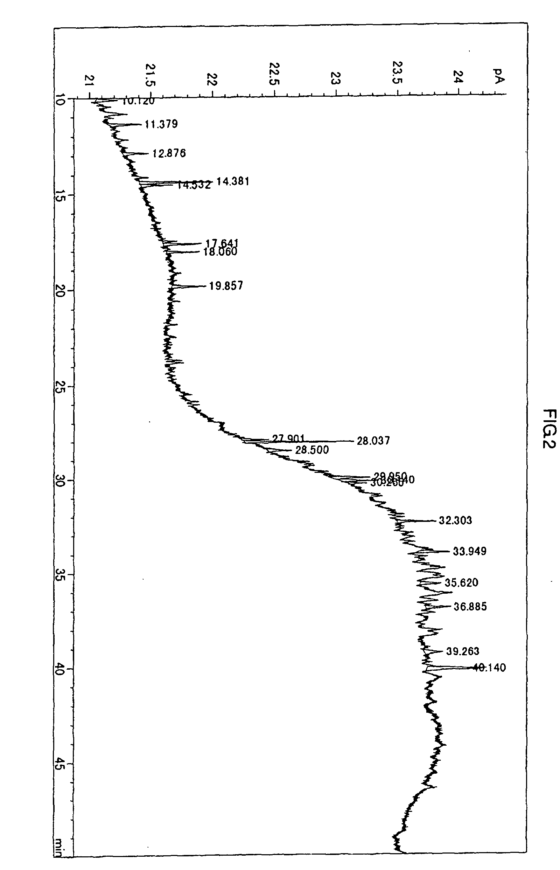

The biaxially oriented multilayer film of Example 9 was produced in the same way as Example 1 except for making the hydrocarbon resin included in the base layer a hydrogenated alicyclic petroleum resin having a softening point of 140°C and $C_9$ fraction as its material. The total peak area of Example 9 was calculated from the gas chromatography analysis chart shown in FIG. 2.

Example 10

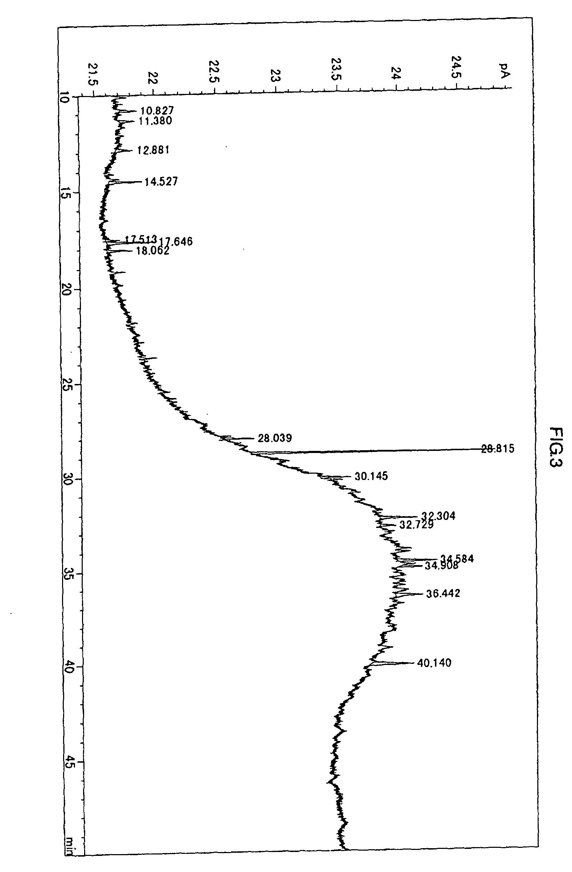

The biaxially oriented multilayer film of Example 10 was produced in the same way as Example 1 except for making the hydrocarbon resin included in the base layer a hydrogenated terpene resin having a softening point of 150°C. The total peak area of Example 10 was calculated from the gas chromatography analysis chart shown in FIG. 3.

Comparative Example 4

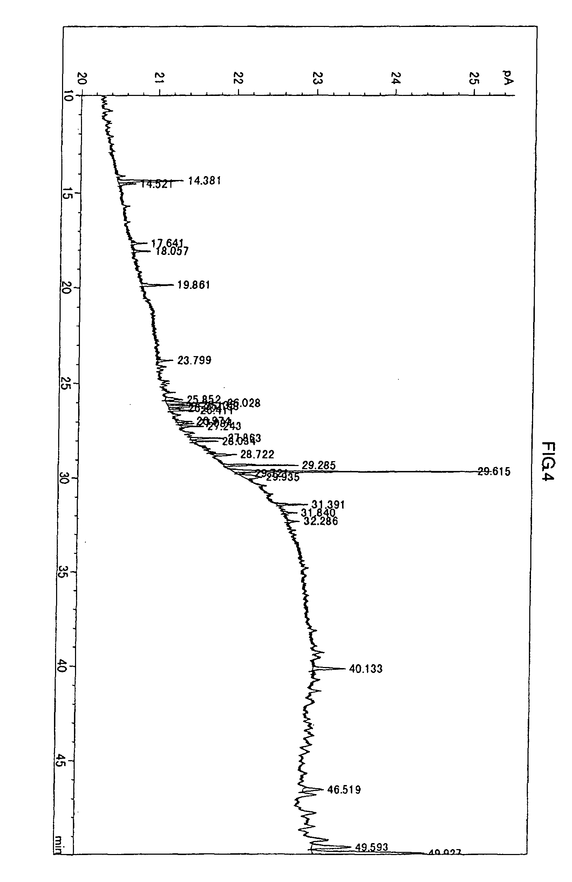

The biaxially oriented multilayer film of Comparative Example 4 was produced in the same way as Example 1 except for making the hydrocarbon resin included in the base layer a hydrogenated dicyclopentadiene-based petroleum resin having a softening point of 105°C. The total peak area of Comparative Example 4 was calculated from the gas chromatography analysis chart shown in FIG. 4.

Comparative Example 5

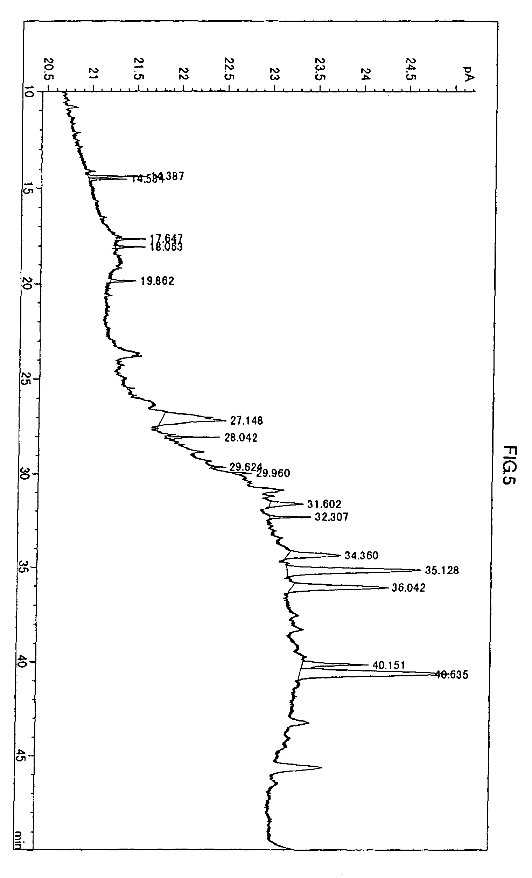

The biaxially oriented multilayer film of Comparative Example 5 was produced in the same way as Example 1 except for making the hydrocarbon resin included in the base layer a hydrogenated dicyclopentadiene-based petroleum resin having a softening point of 125°C. The total peak area of Comparative Example 5 was calculated from the gas chromatography analysis chart shown in FIG. 5.

Table 2

| | Examples | | | Comparative Examples | |
|---|---|---|---|---|---|
| | 1 | 9 | 10 | 4 | 5 |
| Type of hydrocarbon resin | Hydrogenated DCPD | Hydrogenated alicyclic petroleum resin | Hydrogenated terpene resin | Hydrogenated DCPD | Hydrogenated DCPD |
| Softening point of hydrocarbon resin (°C) | 140 | 140 | 150 | 105 | 125 |
| Total peak area (pA·s) | 9 | 27 | 19 | 63 | 114 |
| Smell of product | 37 | 37 | 38 | 38 | 32 |
| Taste of product | 35 | 33 | 33 | 25 | 27 |

Table 2   (continued)

| | Examples | | | Comparative Examples | |
|---|---|---|---|---|---|
| | 1 | 9 | 10 | 4 | 5 |
| Type of hydrocarbon resin | Hydrogenated DCPD | Hydrogenated alicyclic petroleum resin | Hydrogenated terpene resin | Hydrogenated DCPD | Hydrogenated DCPD |
| Overall evaluation of product | Excellent | Good | Good | Not possible | Not possible |
| Hydrogenated DCPD in table indicates hydrogenated dicyclopentane dienebased petroleum resin. | | | | | |

Example 11

The biaxially oriented multilayer film of Example 11 was produced in the same way as Example 1 except that irregularly shaped silica having an oil absorption of 170 ml/100 g and a particle size of 3.9 µm was mixed into 100 parts by weight of a propylene-ethylene-butylene random copolymer forming the surface layers (ethylene and butylene content of 7 parts by weight).

Comparative Example 6

The biaxially oriented multilayer film of Comparative Example 6 was produced in the same way as Example 1 except that irregularly shaped silica having an oil absorption of 310 ml/100 g and a particle size of 3.2 µm was mixed into 100 parts by weight of a propylene-ethylene-butylene random copolymer forming the surface layers (ethylene and butylene content of 7 parts by weight).

Comparative Example 7

The biaxially oriented multilayer film of Comparative Example 7 was produced in the same way as Example 1 except that spherical acrylic particles having an oil absorption of 60 ml/100 g and a particle size of 4 µm was mixed into 100 parts by weight of a propylene-ethylene-butylene random copolymer forming the surface layers (ethylene and butylene content of 7 parts by weight).

Comparative Example 8

The biaxially oriented multilayer film of Comparative Example 8 was produced in the same way as Example 1 except that spherical silicon particles having an oil absorption of 60 ml/100 g and a particle size of 4.5 µm was mixed into 100 parts by weight of a propylene-ethylene-butylene random copolymer forming the surface layers (ethylene and butylene content of 7 parts by weight).

Table 3

| | Example | | Comparative Example | | |
|---|---|---|---|---|---|
| | 1 | 11 | 6 | 7 | 8 |
| Dynamic coefficient of friction $\mu 1$ | 0.20 | 0.16 | 0.22 | 0.17 | 0.15 |
| Dynamic coefficient of friction $\mu 2$ | 0.20 | 0.18 | 0.06 | 0.18 | 0.18 |
| Blocking resistance (N) | 3.9 | 2.7 | 9.9 | 2.9 | 2.6 |
| Stacking property | Good | Good | Poor | Good | Good |
| Scratch resistance | 3 | 2 | 3 | 3 | 1 |
| Detachment resistance | Good | Good | Good | Poor | Poor |

Example 12

The biaxially oriented multilayer film of Example 12 was produced in the same way as Example 1 except that no corona discharge treatment was applied.

Comparative Example 9

The biaxially oriented multilayer film of Comparative Example 9 was produced in the same way as Example 1 except that no antistatic agent was added to the base layer.

Table 4

| | | Example | | Comparative Example |
|---|---|---|---|---|
| | | 1 | 12 | 9 |
| No aging | Half life (sec) | 110 | 180 | 600 or more |
| | Feed out property | 2 2 | | 1 |
| Aging at 35°C for 24 hours | Half life (sec) | 30 | 70 | 600 or more |
| | Feed out property | 3 2 | | 1 |

While the invention has been described with reference to specific embodiments chosen for purpose of illustration, it should be apparent that numerous modifications could be made thereto by those skilled in the art without departing from the basic concept and scope of the invention.

A biaxially oriented multilayer film, able to prevent gaps between the film and a package containing a product or wrinkles and to wrap in a predetermined way while preventing smell from being transferred to the product, comprised of a base layer formed by a propylene-based polymer and surface layers formed by a propylene-based resin on the two surfaces of the base layer, wherein a heat shrinkage rate R1 in a length direction and a heat shrinkage rate R2 in a width direction when heating at 120°C for 15 minutes:

$$R1 = (L1_H - L2_H)/L1_H \tag{a}$$

$$R2 = (L1_W - L2_W)/L1_W \tag{b}$$

$$0.08 \leq R1 \leq 0.20 \tag{c}$$

$$0.08 \leq R2 \leq 0.20 \tag{d}$$

$$|R1 - R2| \leq 0.05 \tag{e}$$

where,

$L1_H$: length before shrinkage in length direction,
$L2_H$: length after shrinkage in length direction,
$L1_W$: length before shrinkage in width direction,
$L2_W$: length after shrinkage in width direction

**Claims**

1. A biaxially oriented multilayer film comprised of a base layer formed by a propylene-based polymer and surface layers formed by a propylene-based resin on the two surfaces of the base layer, wherein
   a heat shrinkage rate R1 in a length direction and a heat shrinkage rate R2 in a width direction when heating at 120°C for 15 minutes:

$$R1 = (L1_H - L2_H)/L1_H \qquad\qquad (a)$$

$$R2 = (L1_W - L2_W)/L1_W \qquad\qquad (b)$$

$$0.08 \leq R1 \leq 0.20 \qquad\qquad (c)$$

$$0.08 \leq R2 \leq 0.20 \qquad\qquad (d)$$

$$|R1 - R2| \leq 0.05 \qquad\qquad (e)$$

where,

$L1_H$:   length before shrinkage in length direction,
$L2_H$:   length after shrinkage in length direction,
$L1_W$:   length before shrinkage in width direction,
$L2_W$:   length after shrinkage in width direction

**2.** A biaxially oriented multilayer film as set forth in claim 1, wherein the base layer contains 80 to 95 parts by weight of a propylene-based polymer and 5 to 20 parts by weight of a hydrocarbon resin.

**3.** A biaxially oriented multilayer film as set forth in claim 2, wherein the hydrocarbon resin contained in the base layer is a petroleum resin having a softening point of 130 to 150°C.

**4.** A biaxially oriented multilayer film as set forth in any one of claims 1 to 3, wherein a total peak area detected in a retention time of 10 minutes to 50 minutes when measuring components heated and volatilizing at 160°C for 15 minutes by gas chromatography is not more than 30 pA·s.

**5.** A biaxially oriented multilayer film as set forth in claim 3, wherein the hydrocarbon resin contained in the base layer is a dicyclopentadiene-based petroleum resin having a softening point of 130 to 150°C.

**6.** A biaxially oriented multilayer film as set forth in any one of claims 1 to 5, wherein a dynamic coefficient of friction $\mu1$ of film measured by JIS K 7125 is not more than 0.3 and a dynamic coefficient of friction $\mu2$ of film measured by JIS K 7125 with a measurement speed of 25 mm/min is not less than 0.15.

**7.** A biaxially oriented multilayer film as set forth in any one of claims 1 to 6, wherein the time when a saturated charging voltage on at least one surface of the film is reduced to half is not more than 200 sec.

FIG.1

FIG.2

FIG.3

FIG.4

FIG.5

European Patent
Office

**EUROPEAN SEARCH REPORT**

Application Number

EP 04 00 7232

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 292 563 A (PEIFFER HERBERT ET AL) 8 March 1994 (1994-03-08) * column 5, line 67 - line 68; table 1 * * column 1, line 40 - column 3, line 30; claims 1-6,9,11,21,22,25,27; example 1 * * column 3, line 57 - line 60 * | 1-7 | B32B27/32 B65D65/40 |
| X | US 5 429 862 A (SCHUHMANN DETLEF E ET AL) 4 July 1995 (1995-07-04) * column 7, line 63 - line 68; claims 1,4-9,12,14-16,19,20,22-28,31,33,34; examples 1-5 * * column 1, line 35 - line 41 * * column 2, line 15 - line 38 * * column 3, line 18 - line 63 * | 1-7 | |
| X | US 4 343 852 A (ISAKA TSUTOMU ET AL) 10 August 1982 (1982-08-10) * column 2, line 31 - line 35; figures * * column 3, line 27 - column 4, line 41; claims 1-5,11 * * column 6, line 29 - column 7, line 45 * | 1-7 | |
| X | WO 01/49487 A (MOBIL OIL CORP) 12 July 2001 (2001-07-12) * page 1, line 29 - line 33 * * page 2, line 9 - page 3, line 13 * * page 4, line 1 - line 18 * * page 5, line 18 - line 31 * * page 6, line 14 - page 7, line 2; claims 1,6,8,10,11,13,19; examples * * see values of oven shrink 250 F md and oven shrink 250 F td on Table of page 11 * | 1-7 | TECHNICAL FIELDS SEARCHED (Int.Cl.7)<br><br>B32B B65D |
| X | US 4 604 324 A (NAHMIAS A MICHAEL ET AL) 5 August 1986 (1986-08-05) * column 2, line 15 - line 68; claims 3,15; example 4; table 1 * | 1,4,6,7 | |

-/--

The present search report has been drawn up for all claims

| Place of search | Date of completion of the search | Examiner |
|---|---|---|
| Munich | 24 July 2004 | Kanetakis, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 462 246 A1

**European Patent Office**

## EUROPEAN SEARCH REPORT

Application Number

EP 04 00 7232

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|----------|---------------------------------------------------------------|-------------------|---------------------------------------------|
| A | US 5 443 895 A (BOTHE LOTHAR ET AL) 22 August 1995 (1995-08-22) * the whole document * ----- | 1-7 | |
| A | US 5 212 009 A (BOTHE LOTHAR ET AL) 18 May 1993 (1993-05-18) * the whole document * ----- | 1-7 | |

**TECHNICAL FIELDS SEARCHED (Int.Cl.7)**

The present search report has been drawn up for all claims

| Place of search | Date of completion of the search | Examiner |
|-----------------|----------------------------------|----------|
| Munich | 24 July 2004 | Kanetakis, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21

**ANNEX TO THE EUROPEAN SEARCH REPORT**
**ON EUROPEAN PATENT APPLICATION NO.**      EP 04 00 7232

This annex lists the patent family members relating to the patent documents cited in  the above-mentioned European search report.
The members are as contained in the European Patent Office EDP file on
The European Patent Office is in no way liable for these particulars which are merely  given for the purpose of information.

24-07-2004

| Patent document cited in search report | | Publication date | Patent family member(s) | | Publication date |
|---|---|---|---|---|---|
| US 5292563 | A | 08-03-1994 | DE | 4037417 A1 | 27-05-1992 |
| | | | DE | 59108536 D1 | 20-03-1997 |
| | | | EP | 0488010 A1 | 03-06-1992 |
| | | | ES | 2098301 T3 | 01-05-1997 |
| | | | FI | 915496 A | 25-05-1992 |
| | | | JP | 6023922 A | 01-02-1994 |
| | | | MX | 9102178 A1 | 08-07-1992 |
| | | | ZA | 9109246 A | 29-07-1992 |
| US 5429862 | A | 04-07-1995 | DE | 4023272 A1 | 23-01-1992 |
| | | | CA | 2047469 A1 | 22-01-1992 |
| | | | DE | 59108429 D1 | 06-02-1997 |
| | | | EP | 0468333 A2 | 29-01-1992 |
| | | | ES | 2098283 T3 | 01-05-1997 |
| | | | FI | 913497 A | 22-01-1992 |
| | | | GR | 3022444 T3 | 30-04-1997 |
| | | | MX | 9100311 A1 | 28-02-1992 |
| | | | US | 5433983 A | 18-07-1995 |
| | | | US | 5554245 A | 10-09-1996 |
| | | | ZA | 9105728 A | 29-04-1992 |
| US 4343852 | A | 10-08-1982 | JP | 1354411 C | 24-12-1986 |
| | | | JP | 56013164 A | 09-02-1981 |
| | | | JP | 60036388 B | 20-08-1985 |
| | | | CA | 1152881 A1 | 30-08-1983 |
| | | | DE | 3026317 A1 | 05-02-1981 |
| | | | FR | 2460856 A1 | 30-01-1981 |
| | | | GB | 2055688 A ,B | 11-03-1981 |
| | | | MX | 154925 A | 08-01-1988 |
| WO 0149487 | A | 12-07-2001 | AU | 2597301 A | 16-07-2001 |
| | | | BR | 0016838 A | 10-09-2002 |
| | | | CA | 2393148 A1 | 12-07-2001 |
| | | | EP | 1263586 A1 | 11-12-2002 |
| | | | JP | 2003519024 T | 17-06-2003 |
| | | | WO | 0149487 A1 | 12-07-2001 |
| | | | US | 2003211298 A1 | 13-11-2003 |
| | | | US | 2002006498 A1 | 17-01-2002 |
| US 4604324 | A | 05-08-1986 | AT | 42239 T | 15-05-1989 |
| | | | AU | 591876 B2 | 21-12-1989 |
| | | | AU | 4713785 A | 10-04-1986 |
| | | | BR | 8504507 A | 15-07-1986 |
| | | | CA | 1263210 A1 | 28-11-1989 |
| | | | DE | 3569494 D1 | 24-05-1989 |
| | | | EP | 0181065 A2 | 14-05-1986 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 04 00 7232

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2004

| Patent document cited in search report | | Publication date | Patent family member(s) | | Publication date |
|---|---|---|---|---|---|
| US 4604324 | A | | ES | 8609406 A1 | 16-12-1986 |
| | | | GR | 852285 A1 | 21-01-1986 |
| | | | JP | 61112643 A | 30-05-1986 |
| | | | NZ | 213357 A | 27-11-1987 |
| | | | TR | 22480 A | 27-07-1987 |
| | | | ZA | 8507499 A | 27-05-1987 |
| US 5443895 | A | 22-08-1995 | DE | 3917652 A1 | 06-12-1990 |
| | | | AU | 632128 B2 | 17-12-1992 |
| | | | AU | 5609690 A | 06-12-1990 |
| | | | DE | 59010080 D1 | 07-03-1996 |
| | | | EP | 0400456 A2 | 05-12-1990 |
| | | | EP | 0663285 A2 | 19-07-1995 |
| | | | ES | 2084615 T3 | 16-05-1996 |
| | | | JP | 3019840 A | 29-01-1991 |
| | | | US | 5212009 A | 18-05-1993 |
| | | | ZA | 9003952 A | 27-03-1991 |
| US 5212009 | A | 18-05-1993 | DE | 3917652 A1 | 06-12-1990 |
| | | | AU | 632128 B2 | 17-12-1992 |
| | | | AU | 5609690 A | 06-12-1990 |
| | | | DE | 59010080 D1 | 07-03-1996 |
| | | | EP | 0400456 A2 | 05-12-1990 |
| | | | EP | 0663285 A2 | 19-07-1995 |
| | | | ES | 2084615 T3 | 16-05-1996 |
| | | | JP | 3019840 A | 29-01-1991 |
| | | | US | 5443895 A | 22-08-1995 |
| | | | ZA | 9003952 A | 27-03-1991 |

For more details about this annex : see Official Journal of the European Patent Office, No. 12/82